# EUROPÄISCHE PATENTSCHRIFT

(11) **EP 0 779 253 B1**
(45) Veröffentlichungstag und Bekanntmachung des Hinweises auf die Patenterteilung: **10.06.1998**
(21) Anmeldenummer: 96116630.3
(22) Anmeldetag: 17.10.1996
(51) Int. Cl.: C03C 3/19, C03C 3/247, C03C 4/08

(54) **Kupfer (II)-oxidhaltiges Alumophosphatgläser**
Copper(II) oxide containing aluminophosphate glasses
Verres d'aluminophosphates contenant de l'oxyde de cuivre(II)

(30) Priorität: 12.12.1995 DE 19546313
(43) Veröffentlichungstag der Anmeldung: 18.06.1997
(73) Patentinhaber: Schott Glas, 55122 Mainz (DE); CARL-ZEISS-STIFTUNG trading as SCHOTT GLASWERKE, 55122 Mainz (DE)
(72) Erfinder: Grabowski, Danuta, 65232 Taunusstein (DE); Kolberg, Uwe, Dr., 55252 Mainz (DE); Weitzel, Alwin, 55120 Mainz (DE); Winkler-Trudewig, Magdalena, 55126 Mainz (DE)

(56) Entgegenhaltungen:
- DE-A- 3 414 682
- DE-B- 2 926 721
- DE-C- 4 031 469
- DATABASE WPI Section Ch, Week 9220 Derwent Publications Ltd., London, GB; Class L01, AN 92-164364 XP002027123 & JP 04 104 918 A (ASAHI GLASS CO LTD) , 7.April 1992
- DATABASE WPI Section Ch, Week 9438 Derwent Publications Ltd., London, GB; Class L01, AN 94-307508 XP002027124 & JP 06 234 546 A (TOSHIBA GLASS KK) , 23.August 1994
- DATABASE WPI Section Ch, Week 8044 Derwent Publications Ltd., London, GB; Class L01, AN 80-78118C XP002027125 & JP 55 121 924 A (TOSHIBA GLASS KK) , 20.September 1980

## Beschreibung

Gegenstand der Erfindung sind kupfer(II)-oxidhaltige Alumophosphatgläser mit hoher Transmission im Wellenlängenbereich von 350 bis 550 nm sowie guter chemischer Resistenz und sehr guter Entglasungsstabilität.

Bei den erfindungsgemäßen Gläsern handelt es sich um sogenannte optische Bandpaßfilter, also Filter mit einem mehr oder weniger schmalen Wellenlängenbereich hoher Transmission (Durchlaßbereich), der von zwei Sperrbereichen umgeben ist. Derartige Gläser finden als optische Glasfilter Verwendung z. B. als Farbkorrektionsfilter in Farbvideokameras.

Neben der hohen Transparenz zwischen 350 und 550 nm ist für die erfindungsgemäßen Gläser eine steile Kante im daran anschließenden UV und eine sehr geringe Transmission oberhalb 700 nm typisch. Während der UV-Bereich möglichst vollständig geblockt werden soll, z. B. um Beschädigungen empfindlicher elektronischer Anordnungen durch die energiereiche Strahlung zu vermeiden, soll die Intensität der einfallenden Strahlung im Bereich > 700 nm abgeschwächt werden, so daß z. B. bei der Verwendung in Videokameras der durch die CCD's verursachte Rotstich der Aufnahme kompensiert wird.

Neben der spektralen Charakteristik, die entscheidend für Filtergläser ist, spielen für eine einfache und kostengünstige Herstellung und für den praktischen Gebrauch weitere Glaseigenschaften eine Rolle. Im einzelnen sind dies:
- Chemische Haltbarkeit:
   Hierunter fallen Säureresistenz, Alkaliresistenz und Fleckenresistenz. Diese Eigenschaften sind bedeutsam für verschiedene Prozesse der Nachverarbeitung.
- Kristallisationsstabilität:
   Diese Eigenschaft muß für eine industrielle Fertigung der Filtergläser besonders ausgeprägt sein.
- Transformationstemperatur T_{g}:
   Die Lage von T_{g} ist von Bedeutung, da oberhalb von T_{g} sich sowohl mechanische als auch optische Eigenschaften irreversibel ändern können.
- Thermischer Ausdehnungskoeffizient α:
   Er ist relevant für die Bearbeitung und für mögliche thermische Vorspannungen der Oberfläche.

Es sind bereits eine große Anzahl CuO-haltiger Gläser mit ähnlichem Transmissionsverhalten bekannt.

Die in DE 29 26 721 C2 beschriebenen Gläser sind alkaliarm; sie enthalten nur bis zu 1,1 Gew.-% Na₂O und nur bis zu 6,5 Gew.-% Alkalioxide insgesamt. Trotz ihres hohen P₂O₅-Gehaltes von mindestens 71 Gew.-% sind sie wegen des geringen Alkaligehalts und wegen des hohen Anteils an Al₂O₃ von mindestens 8,6 Gew.-% schwer schmelzbar. Um den Schmelzvorgang zu erleichtern, benötigen sie mindestens 2,4 Gew.-% B₂O₃. Als Färbemittels wird neben CuO CeO₂ verwendet. Diese Gläser weisen ein relativ hohes Verhältnis zwischen Kristallisatoren und Glasbildnern auf, was sich ungünstig auf die Entglasungsstabilität auswirkt.

In DE 34 14 682 C2 sind Gläser beschrieben, die neben CuO einen verhältnismäßig hohen Anteil des teuren Rohstoffes CeO₂ enthalten, nämlich 0,45 bis 2,0 Gew.-%. Der recht hohe Alkalioxid-Gehalt von bis zu 17 Gew.-% wirkt sich ungünstig auf die chemische Haltbarkeit aus.

DE 40 31 469 C1 beschreibt Gläser, die neben CuO als Hauptfarbkomponente und (ggf. sogar bis zu 3,0 Gew.-%) CeO₂ sowie weiteren fakultativen Farbstoffen zusätzlich V₂O₅ enthalten. Das die Kristallisationsstabilität beeinflussende Verhältnis zwischen Kristallisatoren und Glasbildnern ist bei diesen Gläsern nachteilhaft hoch.

Verschiedenste Gläser sind bekannt, die zur Erzielung der genannten Filtereigenschaften neben den bisher erwähnten Bestandteilen noch weitere Komponenten wie SnO₂, Nd₂O₃ und Fe₂O₃ enthalten.

Obwohl, wie ersichtlich, bereits verschiedene CuO-haltige Phosphatgläser existieren, besteht weiterhin ein Bedarf an verbesserten Gläsern, wobei die Aufgabe der vorliegenden Erfindung die einfache Herstellung einer ganzen Glasfamilie von Einzelglastypen mit variierbaren Eigenschaften ist.

Um ein großes Sortiment von Gläsern mit den geschilderten extremen Filtereigenschaften in einem großen Spektralbereich zu erhalten, werden nach dem bisherigen Stand der Technik nicht nur zahlreiche Farbstoffe mit unterschiedlichen Konzentrationen, sondern auch viele verschiedene Komponenten zum Aufbau der Grundgläser verwendet.

Dies führt in den produzierenden Bereichen zu enormen Lagerkosten (Vielzahl an Rohstoffarten), möglichen Verwechslungen bei den Komponenten und Rohstoffen und somit zu Ausfällen bei der Glasherstellung.
Weiterhin ist es nicht möglich, die Gläser direkt hintereinander zu schmelzen, da die Grundgläser untereinander nicht verträglich sind. Es sind daher Spülschmelzen erforderlich, die zum einen die Produktion verlangsamen und zum anderen teuer sind. Ziel der vorliegenden Erfindung ist es, eine Glasfamilie mit einem Synthesebereich zu erhalten, mit der es möglich ist, die genannten physikalischen Eigenschaften für jeden Einzelglastyp zu optimieren. Die Variation der Synthese innerhalb der Glasfamilie sollte dabei derart sein, daß die unterschiedlichen Transmissionseigenschaften der einzelnen Glastypen nur durch die unterschiedliche Konzentration an Farbkomponenten erreicht wird und nicht mehr durch Variationen im Grundglas.

Gefordert ist also eine Glasfamilie, deren Gläser
- direkt ineinander umschmelzbar sind,
- eine gute chemische Haltbarkeit,
- sowie sehr gute Entglasungsstabilität besitzen und
- durch einen bestimmten Transmissions- bzw. Absorptionsverlauf über einen gewissen Bereich unabhängig von der Grundglassynthese sein soll. Für die Transmission im einzelnen soll gelten:
   - Möglichst gute Strahlungsblockung im spektralen Bereich von λ ≤ 350 nm.
   - Möglichst hohe Transmission im sichtbaren, nichtroten Spektralgebiet, d. h. zwischen 380 nm und ca. 570 nm. Das Maximum der Transmission soll dabei möglichst mit der maximalen Empfindlichkeit des menschlichen Auges (ca. 540 nm) übereinstimmen.
   - Möglichst gute Strahlungsblockung im spektralen Bereich λ ≥ 700 nm.
   - Die Fensterbreite soll so variierbar sein, daß die Transmission im UV und im Sichtbaren an verschiedene Vorgaben unabhängig von der Blockung im spektralen Bereich λ ≥ 700 nm angepaßt werden kann. Daraus folgt, daß die Färbung nicht allein über CuO erfolgen kann. Idealerweise (in der vorliegenden Erfindung verwirklicht) reicht der Zusatz eines weiteren Farbstoffes aus.

Diese Aufgabe wird mit einem Glas gemäß Patentanspruch 1 gelöst. Das erfindungsgemäße Glas besteht somit aus (Gew.-% auf Oxidbasis):

| | |
|---|---|
| Al₂O₃ | 4 - 9 |
| P₂O₅ | 67 - 75 |
| BaO | 0,5 - 6 |
| CaO | 0,1 - 1 |
| MgO | 0 - 4 |
| SrO | 0 - 1 |
| ZnO | 0,2 - 1 |
| Σ BaO+CaO+MgO+SrO+ZnO | 3,5 - 7 |
| Na₂O | 1,5 - 5 |
| K₂O | 2,5 - 3,5 |
| Li₂O | 0,5 - 5 |
| Σ Na₂O+K₂O+Li₂O | 5 - 13 |
| SiO₂ | 0 - 1 |
| B₂O₃ | 1 - 2,5 |
| As₂O₃ | 0, 1 - 0, 5 |
| Cl⁻ | 0 - 0,3 |
| F⁻ | 0 - 1,3 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,06 - 0,125 |

Die Größe dieses Verhältnisses KG zwischen Kristallisatoren und Glasbildnern ist erfindungswesentlich. Es ist bekannt, daß ein hoher Anteil von Al₂O₃ in Phosphatgläsern zu Kristallisation durch Ausscheiden von AlPO₄-Kristallen führt. Ebenso sind SiO₂ und CeO₂ nicht mit der Phosphatglasmatrix kompatibel. Andererseits ist die Mindestmenge von 4 Gew.-% Al₂O₃ erforderlich, um eine ausreichende chemische Beständigkeit zu gewährleisten. Erstaunlicherweise zeigte sich, daß im erfindungsgemäßen Glas keine lineare Zunahme der Kristallisation mit dem Al₂O₃ -Gehalt auftritt, sondern daß das oben definierte KG eine Grenze der Kristallisationsstabilität beschreibt. So darf KG den Wert 0,125 nicht überschreiten. Andererseits ist für die geforderte chemische Haltbarkeit ein KG von mindestens 0,06 gefordert.

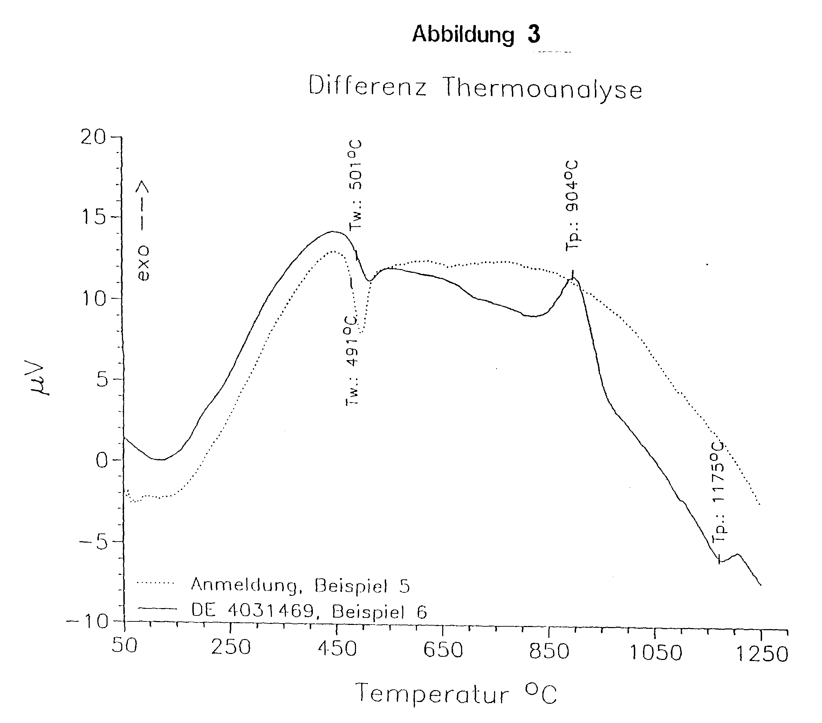

Gläser, deren Verhältnis K oberhalb von 0,125 liegt, zeigen dagegen heftige Kristallisation. Zur Verdeutlichung zeigt Abbildung 3 die Ergebnisse von DTA-Untersuchungen. Die gepunktete Linie stellt die DTA-Kurve des Glases aus Beispiel 5 mit einem KG von 0,124 dar. Als Vergleich dient die Kurve einer Nachschmelze eines Glases aus DE 40 31 469 C1 (dortiges Beispiel 6) (durchgezogene Linie). Dieses Vergleichsglas hat folgende Zusammensetzung (in Gew.-% auf Oxidbasis): Al₂O₃ 7,7; P₂O₅ 76,4; BaO 0,6; CaO 0,2; MgO 2,7; ZnO 0,6; Na₂O 2,8; K₂O 0,2; SiO₂ 1,2; As₂O₃ 0,14; F⁻ 0,14; CeO₂ 1,8; CuO 5,5 V205 0,025. Das Verhältnis KG errechnet sich zu 0,14.

Man erkennt bei beiden Kurven je einen endothermen Peak T_{w}, der näherungsweise dem T_{g} entspricht. Entscheidend sind jedoch die zwei exothermen Peaks in der durchgezogenen Kurve.
Diese entsprechen dem Bildungsbereich einer Kristallphase, d. h. zwischen diesen beiden Peaks tritt in dem Glas Kristallisation ein. Die Lage des Peakmaximums bei niedrigerer Temperatur entspricht dabei in etwa der Temperatur der maximalen Keimbildung (KGₘₐₓ) und die Peakfläche der Anzahl der gebildeten Kristalle. Man erkennt, daß bei dem Glas nach DE 40 31 469 C1 bei ca. 904 °C eine ziemliche umfangreiche Kristallisation stattfindet. Dieser Prozeß läuft bis ca. 1200 °C ab. Oberhalb dieser Temperatur lösen sich die gebildeten Kristalle wieder auf. Diese Obere Entglasungs-Grenze erzwingt, daß die Gußtemperatur auf einen für ein Phosphatglas sehr hohen Wert gelegt werden muß, was bekanntermaßen einen ungünstigen Einfluß auf die Schlierenqualität ausübt. Weiterhin können keine großen Gußstücke aus diesem Glas gefertigt werden, da aufgrund des großen Wärmeinhalts das kritische Temperaturgebiet nicht schnell genug durchfahren werden kann.

Bei dem erfindungsgemäßen Glas treten diese Probleme nicht auf, da hier keine Kristallisation statffindet (kein exothermer DTA-Peak). Die Ursache hierfür liegt in den unterschiedlichen K_{G}-Werten.

Die aufgrund der DTA-Untersuchungen gemachten Aussagen werden durch Beobachtungen bei den Schmelzen bestätigt.

In den erfindungsgemäßen Gläsern kann der CuO-Anteil innerhalb eines relativ großen Bereiches, nämlich zwischen 1 und 6 Gew.-% variiert werden. Auf diese Weise ist durch eine bestimmte Cu²⁺-Konzentration die Bandweite des Transmissionsbereiches einstellbar. So bewirkt bei durch die Art des färbenden lons und auch durch die Grundglaszusammensetzung festgelegtem Bandschwerpunkt eine Konzentrationserhöhung der Cu²⁺-Ionen, daß die im UV und IR liegenden Absorptionsbanden stärker werden, somit die jeweiligen Kanten ins Sichtbare verschoben werden und die Bandweite verringert wird.
Zur Variation der Bandweite sind relativ große Konzentrationsänderungen nötig. Dagegen rufen beim CeO₂ schon kleine Mengen und geringste Konzentrationsänderungen Effekte hervor. Im erfindungsgemäßen Glaszusammensetzungsbereich ist im Unterschied zu DE 34 14 682 C2 schon ein CeO₂-Gehalt von 0,1 bis 0,4 Gew.-% ausreichend. Da es sich hierbei um einen kostspieligen Rohstoff handelt, ist dieser Aspekt für eine kostengünstige Produktion bedeutsam.

Im Vergleich zu DE 29 26 721 C2 besitzt das erfindungsgemäße Glas einen hohen Anteil an Alkalioxiden (bis zu 13 Gew.-%) sowie speziell an Na₂O (1,5 - 5 Gew.-%). Dadurch wird der Schmelzpunkt herabgesetzt, was die Produktion wesentlich erleichtert. Andererseits ist der Alkaligehalt niedrig genug, um eine gute chemische Beständigkeit zu gewährleisten.

Im Gegensatz zu den Gläsern aus DE 40 31 469 C1 benötigt das erfindungsgemäße Glas kein V₂O₅. Anders als in DE 40 31 469 C1 beschrieben, wird hier durch Zugabe von V₂O₅ keine weitere Verbesserung der Steilheit der IR-Kante erzielt. Im Bereich zwischen 450 und 500 nm setzt V₂O₅ die Transmission sogar geringfügig herab, was auf niedervalente Oxidationsstufen des Vanadiums zurückzuführen ist.

Da im Glas normalerweise immer Redox-Prozesse ablaufen, die bei polyvalenten Elementen zur Einstellung verschiedener Oxidationszustände führen, müßte man die genannten Nachteile bei Vanadium entweder in Kauf nehmen oder den Schmelzprozeß sehr stark oxidierend fahren, was aber wiederum zu einen unerwünschten verstärkten Pt-Angriff (Schmelztiegel) führen würde, wobei Pt-Teilchen ins Glas gelangen würden. Das schließt solche Gläser z. B. für Laseranwendungen aus.

Um so wertvoller ist das Ergebnis, daß auf den Zusatz von V₂O₅ ganz verzichtet werden kann. Auch wird so die Logistik der Gemengezubereitung vereinfacht.

Wenn die Transmissionseigenschaften in einem gewissen Bereich unabhängig von der Grundglassynthese (bei konstanter Farbstoffkonzentration) sind, können weitere Eigenschaften innerhalb dieses Bereiches durch Änderungen an der Grundglassynthese verändert werden, ohne daß man befürchten muß, daß die Transmission wieder größere Verschiebungen erfährt. Eine Aufgabe dieser Art ist nicht trivial, denn einerseits sollen einige Eigenschaften möglichst nur schwach von der Zusammensetzung abhängen, während andere möglichst stark variieren sollen. Das erfindungsgemäße Glas ermöglicht diese Forderungen.

Eine der Eigenschaften, die auf diese Weise angepaßt werden müssen, ist die Transformationstemperatur T_{g}:
1. Gläser, die durch Senken umgeformt werden sollen und somit eine relativ komplizierte Geometrie erhalten, die direkt aus der Schmelze oder durch Schleifen und Polieren entweder gar nicht oder nur unter hohen Kosten möglich ist, sollen einen möglichst niedrigen T_{g} haben, der auch weit von den Kristallisationstemperaturen entfernt liegt.
2. Gläser, die in Beleuchtungsvorrichtungen eingesetzt werden oder auf andere Weise einer höheren Temperatur ausgesetzt sind, sollen einen möglichst hohen T_{g} aufweisen. Dies wirkt zum einen einer Verformung entgegen, zum anderen bleibt dadurch eine je nach Anforderung aufgebrachte thermische Härtung (Vorspannung) möglichst lange erhalten.

Daraus ergeben sich zwei bevorzugte Zusammensetzungsbereiche des erfindungsgemäßen Glases (Gew.-% auf Oxidbasis), nämlich für Gläser mit relativ niedriger Transformationstemperatur:

| | |
|---|---|
| Al₂O₃ | 4 - 5 |
| P₂O₅ | 67 - 70 |
| BaO | 4,5 - 6 |
| CaO | 0,3 - 1 0 - 1 |
| MgO | |
| SrO | 0 - 1 |
| ZnO | 0,2 - 0,6 |
| Σ BaO+CaO+MgO+SrO+ZnO | 5 - 7 |
| Na₂O | 4 - 5 |
| K₂O | 2,5 - 3,5 |
| Li₂O | 4 - 5 |
| Σ Na₂O+K₂O+Li₂O | 10,5 - 13 |
| SiO₂ | 0 - 1 |
| B₂O₃ | 1 - 1,5 |
| As₂O₃ | 0,1 - 0,4 |
| Cl⁻ | 0 - 0,3 |
| F⁻ | 0 - 1,3 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,06 - 0,09 |

und für Gläser mit relativ hoher Transformationstemperatur:

| | |
|---|---|
| Al₂O₃ | 7,5 - 9 |
| P₂O₅ | 72 - 75 |
| BaO | 0,5 - 1 |
| CaO | 0,1 - 0,5 |
| MgO | 3 - 4 |
| SrO | 0 - 1 |
| ZnO | 0,2 - 0,6 |
| Σ BaO+CaO+MgO+SrO+ZnO | 5 - 6 |
| Na₂O | 1,5 - 2 |
| K₂O | 3 - 3,5 |
| Li₂O | 0,5 - 1 |
| Σ Na₂O+K₂O+Li₂O | 5 - 6 |
| SiO₂ | 0,1 - 1 |
| B₂O₃ | 1,5 - 2,5 |
| As₂O₃ | 0,1 - 0,3 |
| Cl⁻ | 0 - 0,3 |
| F⁻ | 0-0,5 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,095- 0,125 |

### Beispiele:

Es wurden sechs Beispiele erfindungsgemäßer Gläser aus üblichen Rohstoffen erschmolzen. In Tabelle 1 sind deren Zusammensetzungen und einige wesentlichen Eigenschaften zusammengestellt. Dabei entsprechen die Beispiele 1 und 2 Gläsern mit niedriger Transformationstemperatur, gefordert z.B. für nachträgliche thermische Verformung, während die Beispiele 3 bis 6 Gläser mit hoher Transformationstemperatur, geeignet z. B. zum Einsatz für Beleuchtungszwecke, beschreiben.

### Es bedeuten:

- K_{G}: Z Al₂O₃+SiO₂+CeO₂ / Σ P₂O₅+B₂O₃
- n_{d}: Brechzahl bei 587,56 nm
- T_{g}: Transformationstemperatur
- α: thermischer Ausdehnungskoeffizient

**Tabelle 1**

| Glaszusammensetzungen (in Gew.-% auf Oxidbasis) | | | | | | |
|---|---|---|---|---|---|---|
| | 1 | 2 | 3 | 4 | 5 | 6 |
| | | | | | | |
| Al₂O₃ | 4,32 | 4,45 | 8,47 | 8,76 | 8,45 | 8,72 |
| P₂O₅ | 67,72 | 69,85 | 72,20 | 74,69 | 72,03 | 74,28 |
| BaO | 5,73 | 5,91 | 0,61 | 0,63 | 0,61 | 0,63 |
| CaO | 0,65 | 0,67 | 0,36 | 0,37 | 0,36 | 0,37 |
| MgO | | | 3,50 | 3,62 | 3,48 | 3,59 |
| ZnO | 0,26 | 0,27 | 0,58 | 0,60 | 0,58 | 0,60 |
| Na₂O | 4,62 | 4,77 | 1,77 | 1,83 | 1,76 | 1,81 |
| K₂O | 2,96 | 3,05 | 3,23 | 3,34 | 3,22 | 3,33 |
| Li₂O | 4,62 | 4,77 | 0,55 | 0,57 | 0,55 | 0,57 |
| SiO₂ | | | 0,48 | 0,50 | 0,48 | 0,50 |
| B₂O₃ | 1,13 | 1,17 | 2,34 | 2,43 | 2,34 | 2,41 |
| CeO₂ | 0,35 | 0,36 | 0,29 | 0,30 | 0,29 | 0,30 |
| As₂O₃ | 0,17 | 0,18 | 0,24 | 0,25 | 0,24 | 0,25 |
| Cl⁻ | 0,28 | 0,29 | | | | |
| F⁻ | 1,24 | 1,28 | 0,27 | 0,28 | 0,27 | 0,28 |
| CuO | 5,93 | 2,97 | 5,11 | 1,85 | 5,34 | 2,38 |
| BaO+CaO+ MgO+ZnO | 6,64 | 6,85 | 5,05 | 5,22 | 5,03 | 5,19 |
| R₂O | 12,20 | 12,59 | 5,55 | 5,74 | 5,53 | 5,71 |
| K_{G} | 0,068 | 0,068 | 0,124 | 0,124 | 0,124 | 0,124 |
| n_{d} | 1,5367 | 1,5280 | 1,5361 | 1,5295 | 1,5363 | 1,5365 |
| T_{g} [°C] | 316 | 307 | 471 | 480 | 473 | 481 |
| α_{20/200} [10⁻⁶/K] | 13,5 | 13,8 | 8,8 | 8,9 | 8,8 | 8,8 |

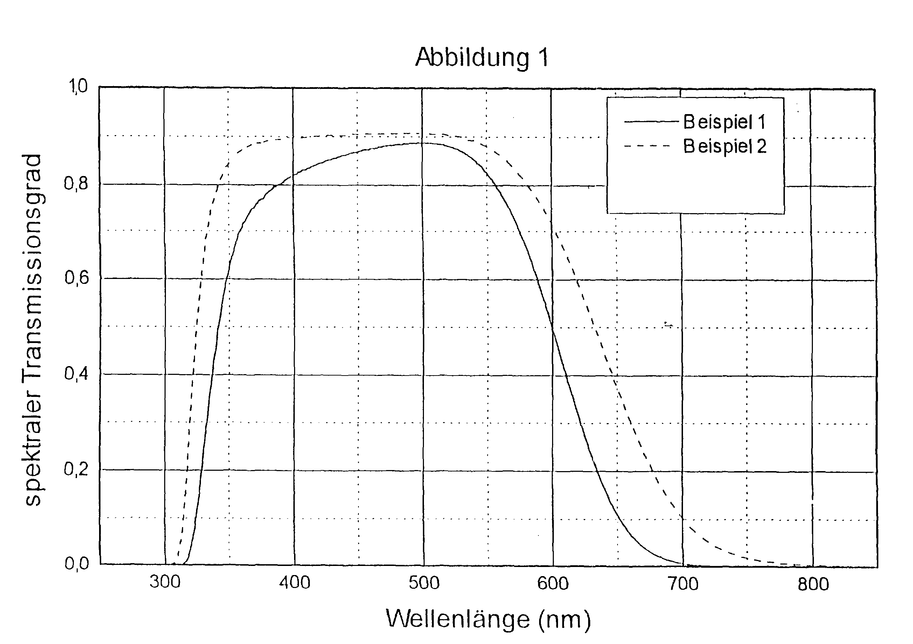

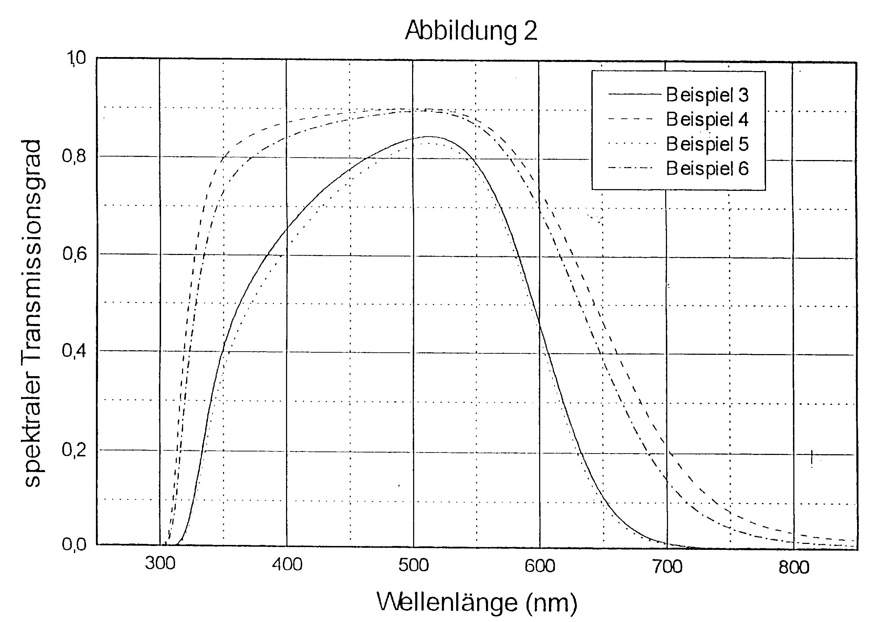

Die Transmissionskurven (spektraler Transmissionsgrad versus Wellenlänge) der sechs Beispiele für den Bereich 300 bis 800 nm sind in den Abbildungen 1(Beispiele 1 und 2) und 2 (Beispiele 1 bis 6) dargestellt. Die Transmissionseigenschaften beziehen sich auf eine Probendicke von 1 mm ± 0,02 mm.

## Patentansprüche

1. Kupfer(II)-oxidhaltiges Alumophosphatglas mit einem Brechwert n_{d} zwischen 1.52 und 1.54, mit guter chemischer Resistenz, sehr guter Entglasungsstabilität und einer hohen Transmission zwischen 350 und 550 nm, gekennzeichnet durch eine Zusammensetzung (in Gew.-% auf Oxidbasis) von
| | |
|---|---|
| Al₂O₃ | 4 - 9 |
| P₂O₅ | 67 - 75 |
| BaO | 0,5 - 6 |
| CaO | 0,1 - 1 |
| MgO | 0 - 4 |
| SrO | 0 - 1 |
| ZnO | 0,2 - 1 |
| Σ BaO+CaO+MgO+SrO+ZnO | 3,5 - 7 |
| Na₂O | 1,5 - 5 |
| K₂ O | 2,5 - 3,5 |
| Li₂O | 0,5 - 5 |
| Σ Na₂O+K₂O+Li₂O | 5 - 13 |
| SiO₂ | 0 - 1 |
| B₂O₃ | 1 - 2,5 |
| As₂O₃ | 0,1 - 0,5 |
| Cl⁻ | 0 - 0,3 |
| F⁻ | 0 - 1,3 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,06 - 0,125 |

2. Alumophosphatglas nach Anspruch 1, gekennzeichnet durch eine Zusammensetzung (in Gew.-% auf Oxidbasis) von
| | |
|---|---|
| Al₂O₃ | 4 - 5 |
| P₂O₅ | 67 - 70 |
| BaO | 4,5 - 6 |
| CaO | 0,3 - 1 |
| MgO | 0 - 1 |
| SrO | 0 - 1 |
| ZnO | 0,2 - 0,6 |
| Σ BaO+CaO+MgO+SrO+ZnO | 5 - 7 |
| Na₂O | 4 - 5 |
| K₂O | 2,5 - 3,5 |
| Li₂O | 4 - 5 |
| Σ Na₂O+K₂O+Li₂O | 10,5 - 13 |
| SiO₂ | 0 - 1 |
| B₂O₃ | 1 - 1,5 |
| As₂O₃ | 0,1 - 0,4 |
| Cl⁻ | 0 - 0,3 |
| F⁻ | 0 - 1,3 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,06 - 0,09 |

3. Alumophosphatglas nach Anspruch 1, gekennzeichnet durch eine Zusammensetzung (in Gew.-% auf Oxidbasis) von
| | |
|---|---|
| Al₂O₃ | 7,5 - 9 |
| P₂O₅ | 72 - 75 |
| BaO | 0,5 - 1 |
| CaO | 0,1 - 0,5 |
| MgO | 3 - 4 |
| SrO | 0 - 1 |
| ZnO | 0,2 - 0,6 |
| Σ BaO+CaO+MgO+SrO+ZnO | 5 - 6 |
| Na₂O | 1,5 - 2 |
| K₂O | 3 - 3,5 |
| Li₂O | 0,5 - 1 |
| Σ Na₂O+K₂O+Li₂O | 5 - 6 |
| SiO₂ | 0,1 - 1 |
| B₂O₃ | 1,5 - 2,5 |
| As₂O₃ | 0,1 - 0,3 |
| Cl⁻ | 0 - 0,3 |
| F⁻ | 0-0,5 |
| CeO₂ | 0,2 - 0,4 |
| CuO | 1 - 6 |
| | |
| mit K_{G} = Σ Al₂O₃+SiO₂+CeO₂ / Σ P₂O₅+B₂O₃ | 0,095- 0,125 |

## Claims

1. Copper(II) oxide-containing aluminophosphate glass having a refractive index n_{d} of from 1.52 to 1.54, good chemical resistance, very good devitrification stability and high transmission between 350 and 550 nm, characterized by a composition (in % by weight, based on oxide) of:
| | |
|---|---|
| Al₂O₃ | 4 - 9 |
| P₂O₅ | 67 - 75 |
| BaO | 0.5 - 6 |
| CaO | 0.1 - 1 |
| MgO | 0 - 4 |
| SrO | 0 - 1 |
| ZnO | 0.2 - 1 |
| Σ BaO+CaO+MgO+SrO+ZnO | 3.5 - 7 |
| Na₂O | 1.5 - 5 |
| K₂O | 2.5 - 3.5 |
| Li₂O | 0.5 - 5 |
| Σ Na₂O+K₂O+Li₂O | 5 - 13 |
| SiO₂ | 0 - 1 |
| B₂O₃ | 1 - 2.5 |
| AS₂O₃ | 0.1 - 0.5 |
| Cl⁻ | 0 - 0.3 |
| F⁻ | 0 - 1.3 |
| CeO₂ | 0.2 - 0.4 |
| CuO | 1 - 6 |
| | |
| with K_{G} = Σ Al₂O₃+SiO₂+CeO₂ /Σ P₂O₅+B₂O₃ | 0.06 - 0.125 |

2. Aluminophosphate glass according to Claim 1, characterized by a composition (in % by weight, based on oxide) of:
| | |
|---|---|
| Al₂O₃ | 4 - 5 |
| P₂O₅ | 67 - 70 |
| BaO | 4.5 - 6 |
| CaO | 0.3 - 1 |
| MgO | 0 - 1 |
| SrO | 0 - 1 |
| ZnO | 0.2 - 0.6 |
| Σ BaO+CaO+MgO+SrO+ZnO | 5 - 7 |
| Na₂O | 4 - 5 |
| K₂O | 2.5 - 3.5 |
| Li₂O | 4 - 5 |
| Σ Na₂O+K₂O+Li₂O | 10.5 - 13 |
| SiO₂ | 0 - 1 |
| B₂O₃ | 1 - 1.5 |
| AS₂O₃ | 0.1 - 0.4 |
| Cl⁻ | 0 - 0.3 |
| F⁻ | 0 - 1.3 |
| CeO₂ | 0.2 - 0.4 |
| CuO | 1 - 6 |
| | |
| with K_{G} = Σ Al₂O₃+SiO₂+CeO₂ /Σ P₂O₅+B₂O₃ | 0.06 - 0.09 |

3. Aluminophosphate glass according to Claim 1, characterized by a composition (in % by weight, based on oxide) of:
| | |
|---|---|
| Al₂O₃ | 7.5 - 9 |
| P₂O₅ | 72 - 75 |
| BaO | 0.5 - 1 |
| CaO | 0.1 - 0.5 |
| MgO | 3 - 4 |
| SrO | 0 - 1 |
| ZnO | 0.2 - 0.6 |
| Σ BaO+CaO+MgO+SrO+ZnO | 5 - 6 |
| Na₂O | 1.5 - 2 |
| K₂O | 3 - 3.5 |
| Li₂O | 0.5 - 1 |
| Σ Na₂O+K₂O+Li₂O | 5 - 6 |
| SiO₂ | 0.1 - 1 |
| B₂O₃ | 1.5 - 2.5 |
| AS₂O₃ | 0.1 - 0.3 |
| Cl⁻ | 0 - 0.3 |
| F⁻ | 0 - 0.5 |
| CeO₂ | 0.2 - 0.4 |
| CuO | 1 - 6 |
| | |
| with K_{G} = Σ Al₂O₃+SiO₂+CeO₂/C P₂O₅+B₂O₃ | 0.095-0.125 |

## Revendications

1. Verre d'aluminophosphate, contenant de l'oxyde de cuivre (II), ayant un indice de réfraction n_{d} compris entre 1,52 et 1,54, une bonne résistance chimique, une très bonne stabilité de dévitrification et une transmission élevée comprise entre 350 et 550 nm, caractérisé par une composition (en % en poids sur la base des oxydes) de
| | |
|---|---|
| AL₂O₃ | 4 - 9 |
| P₂O₅ | 67 - 75 |
| BaO | 0,5 - 6 |
| CaO | 0,1 - 1 |
| M_{g}O | 0 - 4 |
| SrO | 0 - 1 |
| ZnO | 0,2 - 1 |
| ΣBaO+CaO+MgO+SrO+ZnO | 3,5 - 7 |
| Na₂O | 1,5 - 5 |
| K₂O | 2,5 - 3,5 |
| Li₂O | 0,5 - 5 |
| ΣNa₂O+K₂O+Li₂O | 5 - 13 |
| SiO₂ | 0 - 1 |
| B₂O₃ | 1 - 2,5 |
| As₂O₃ | 0,1 - 0,5 |
| Cl⁻ | 0 - 0,3 |
| F⁻ | 0 - 1,3 |
| CeO₂ | 0,2 - 0,4 |
| CuO | 1 - 6 |
| | |
| avec K_{G} = ΣAL₂O₃+SiO₂+CeO₂/ΣP₂O₅+B₂O₂ | 0,06 - 0,125 |

2. Verre d'aluminophosphate selon la revendication 1, caractérisé par une composition (en % en poids sur la base des oxydes) de
| | |
|---|---|
| AL₂O₃ | 4 - 5 |
| P₂O₅ | 67 - 70 |
| BaO | 4,5 - 6 |
| CaO | 0,3 - 1 |
| MgO | 0 - 1 |
| SrO | 0 - 1 |
| ZnO | 0,2 - 0,6 |
| ΣBaO+CaO+MgO+SrO+ZnO | 5 - 7 |
| Na₂O | 4 - 5 |
| K₂O | 2,5 - 3,5 |
| Li₂O | 4 - 5 |
| ΣNa₂O+K₂O+Li₂O | 10,5 - 13 |
| SiO₂ | 0 - 1 |
| B₂O₃ | 1 - 1,5 |
| As₂O₃ | 0,1 - 0,4 |
| Cl⁻ | 0 - 0,3 |
| F⁻ | 0 - 1,3 |
| CeO₂ | 0,2 - 0,4 |
| CuO | 1 - 6 |
| | |
| avec K_{G} = ΣAL₂O₃+SiO₂+CeO₂/ΣP₂O₅+B₂O₃ | 0,06 - 0,09 |

3. Verre d'aluminophosphate selon la revendication 1, caractérisé par une composition (en % en poids sur la base des oxydes) de
| | |
|---|---|
| AL₂O₃ | 7,5 - 9 |
| P₂O₅ | 72 - 75 |
| BaO | 0,5 - 1 |
| CaO | 0,1 - 0,5 |
| M_{g}O | 3 - 4 |
| SrO | 0 - 1 |
| ZnO | 0,2 - 0,6 |
| ΣBaO+CaO+MgO+SrO+ZnO | 5 - 6 |
| Na₂O | 1,5 - 2 |
| K₂O | 3 - 3,5 |
| Li₂O | 0,5 - 1 |
| ΣNa₂O+K₂O+Li₂O | 5 - 6 |
| SiO₂ | 0,1 - 1 |
| B₂O₃ | 1,5 - 2,5 |
| As₂O₃ | 0,1 - 0,3 |
| Cl⁻ | 0 - 0,3 |
| F⁻ | 0 - 0,5 |
| CeO₂ | 0,2 - 0,4 |
| CuO | 1 - 6 |
| | |
| avec K_{G} = ΣAL₂O₃+SiO₂+CeO₂/ΣP₂O₅+B₂O₃ | 0,095 - 0,125 |
